Europäisches Patentamt

European Patent Office

Office européen des brevets

(11) Publication number: **0 389 920**
**A1**

# EUROPEAN PATENT APPLICATION

(21) Application number: **90105181.3**

(22) Date of filing: **20.03.90**

(51) Int. Cl.⁵: **A61M 5/00**

(30) Priority: **27.03.89 JP 74597/89**

(43) Date of publication of application:
**03.10.90 Bulletin 90/40**

(84) Designated Contracting States:
**BE DE FR GB IT**

(71) Applicant: **NISSHO CORPORATION**
**9-3, Honjo-nishi 3-chome Kita-ku**
**Osaka-shi(JP)**

(72) Inventor: **Futagawa, Hitoshi**
**2-5-7, Yagura**
**Kusatsu-shi, Shiga-ken(JP)**
Inventor: **Kawamoto, Shoji**
**3-24-14, Matsugaoka**
**Takatsuki-shi, Osaka-fu(JP)**

(74) Representative: **Türk, Gille, Hrabal**
**Brucknerstrasse 20**
**D-4000 Düsseldorf 13(DE)**

(54) **Apparatus for manufacturing protector of blood bag and method for manufacturing protector using the apparatus.**

(57) An apparatus for manufacturing a protector (12) sealingly protecting an inlet/outlet tube (11) attached to a blood bag (10). The apparatus comprises a lower cooling mold (1) having a plain surface (21) and at least one groove (22) for receiving a tube (11); an upper cooling mold (3) having a plain first pressing surface (24) correspondng to the plain surface (21) of the lower cooling mold (1), at least one groove (25) for receiving the tube (11) and at least one hole (26) having the same shape as the protector (12); and a heating mold (4) inserted through the hole (26) or holes (26) of the upper cooling mold (3). A method for manufacturing a protector (12) using the above apparatus is also disclosed.

*F I G . I*

## APPARATUS FOR MANUFACTURING PROTECTOR OF BLOOD BAG AND METHOD FOR MANUFACTURING PROTECTOR USING THE APPARATUS

The present invention relates to an apparatus for manufacturing a protector which sealingly protect a tube for a blood inlet/outlet attached to a blood bag, and a method for manufacturing a protector using the apparatus.

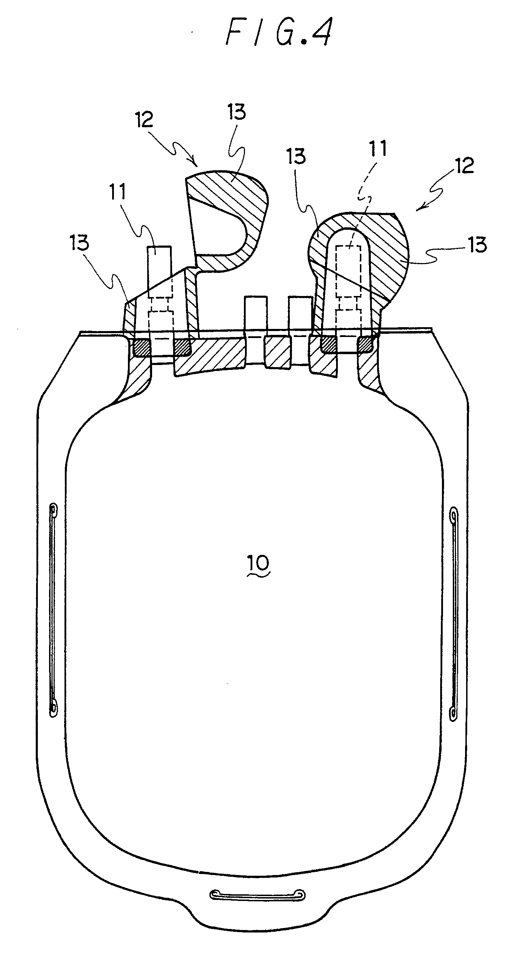

A blood bag is a kind of vessel made of soft synthetic resin used in collecting, preserving or tranfusing blood in a sterile condition. A tube 11 for a blood inlet/outlet is attached to a bag 10 of the blood bag as shown in Fig. 4. The tube 11 is covered with a protector 12 made of soft synthetic resin such as polyvinyl chloride and is sealed by means of welding and the like. In Fig. 4, a protector on the right side shows one which is sealed up before opening, and a protector on the left side shows one which is broken at its opening line to expose a tube 11. A hatched portion in Fig. 4 shows a welded portion 13 for sealing up the tube 11.

The conventional protector 12 is manufactured as stated hereinafter. Firstly, the upper and lower parts of the tube 11 are sandwiched between two sheets made of soft synthetic resin. The sheets are pressed and heated by a heating mold with covering the tube 11 and its priphery so that the sheets are heat-welded to manufacture a protector 12.

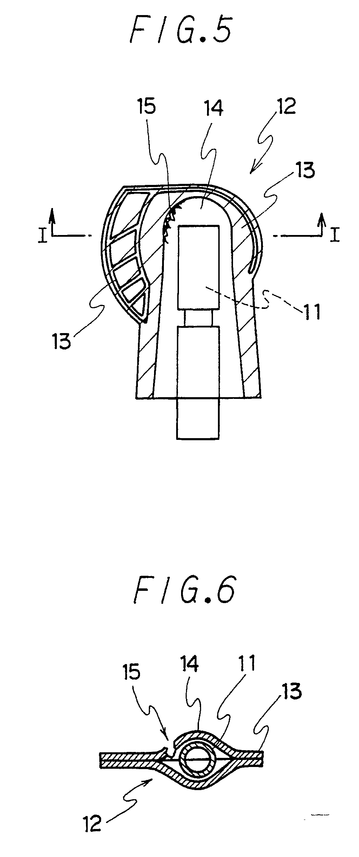

In the conventional manufacturing method, however, there are frequently generated tears 15 between a bag portion 14 containing the tube 11 and the welded portion 13 around the bag portion 14 as shown in Fig. 5 and Fig. 6. One of the reason why such tears are generated, is that unwelded sheets shrink near the boundary between welded portion and the unwelded portion by the welding of the sheets, whereby the sheets cannot endure tension due to bulge of the tubular tube 11.

The present invention was made to solve the above-mentioned drawback and it is an object of the present invention to provide an apparatus for manufacturing protectors which can prevent generation of tears at a bag portion and a method for manufacturing the same.

In accordance with the present invention, there is provided an apparatus for manufacturing a protector sealingly protecting an inlet/outlet tube attached to a blood bag comprising:

(a) a lower cooling mold having a plain surface whereon a sheet to be made into the protector is placed, at least one groove for receiving the tube being formed on the plain surface, and the mold being kept cool;

(b) an upper cooling mold having a plain first pressing surface corresponding to the plain surface of the lower cooling mold, at least one groove for receiving the tube being formed on the plain first pressing surface at such position as corresponds to the groove or grooves of the lower cooling mold, at least one hole having the same shape as the protector being made on the plain first pressing surface, and the mold being kept cool; and

(c) a heating mold having a second pressing surface of the same shape as a welded portion of the protector, the mold being inserted through the hole or holes of the upper cooling mold.

The present invention further provides a method for manufacturing a protector sealingly protecting an inlet/outlet tube attached to a blood bag comprising the steps of putting a tube between two sheets to be made into the protector, heating a portion to be welded to form a protector, and cooling a portion adjacent to the heated portion.

In the present invention, only the welded portion is heated by the heating mold to carry out the welding while cooling a portion of the protector other than the welded portion by the lower cooling mold and the upper cooling portion. Accordingly, a portion of the sheet other than the welded portion is cooled and heat of the welded portion does not transfer to such unwelded portion, so that the sheet does not shrink near the boundary between the unwelded portion and the welded portion. Thus, tears of the bag portion can be prevented.

Fig. 1 is an exploded perspective view of an embodiment of a manufacturing apparatus of the present invention;

Fig. 2a, Fig. 2b, Fig. 2c and Fig. 2d are process drawings showing a manufacturing method of the present invention;

Fig. 3 is an explanatory view showing a state wherein the apparatus of Fig.1 is used;

Fig. 4 is a plan view of a blood bag;

Fig. 5 is a view explaining a drawback of a protector manufactured according to the conventional method; and

Fig. 6 is a sectional view taken along the line (I)-(I) of Fig. 5.

Next, an embodiment of the present invention is explained.

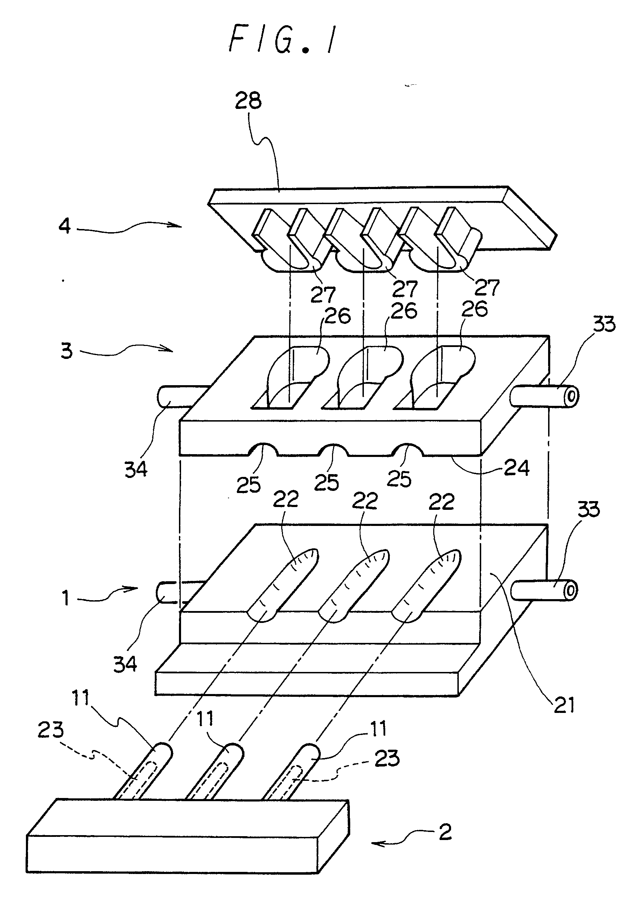

In Fig. 1, numerals 1, 2, 3 and 4 are a lower cooling mold, a tube holder, an upper cooling mold and a heating mold, respectively.

The lower cooling mold 1 has at its upper portion a plain surface 21 whereon a sheet to be made into a protector is placed. A plural grooves 22 for receiving a tube 11 in a stable condition are formed on suitable positions of the plain surface 21. The lower cooling mold 1 is kept at a low temperature during manufacturing process by supplying water to a water inlet 33, filling the inside of the mold 1 with water, and flowing water from a water outlet 34.

A tube holder 2 serves to hold the tube 11 to prevent free movement of the tube 11. As a tube holder in the present invention, any device can be used so long as it can exhibit such holding function. For example, a device which hold a tube 11 with a pin 23 can be used.

The upper cooling mold 3 has at its lower portion a plain first pressing surface 24 corresponding to the surface 21 of the lower cooling mold 1. A suitable number of grooves 25 are formed on such position of the first pressing surface 24 as corresponds to the grooves 22 of the lower cooling mold 1. The grooves 25 have the same shape as the grooves 22. The upper cooling mold 3 has holes 26 at a portion where grooves 25 for receiving tubes 11 are formed. The holes 26 have the same shape as protectors to be formed. The upper cooling mold 3 is also kept at a low temperature during manufacturing process. The same structure and method as the lower cooling mold 1 can be employed to cool the upper cooling mold 2

The heating mold 4 has a second pressing surface 27 of the same shape as the welded portion of a protector to be made, and has an external shape which permits the insertion of the heating mold 4 into the hole 26. A suitable number of heating molds 4 are supported by a supporting member 28. The heating mold 4 can be heated by, for example, an electric heater provided in the heating mold 4.

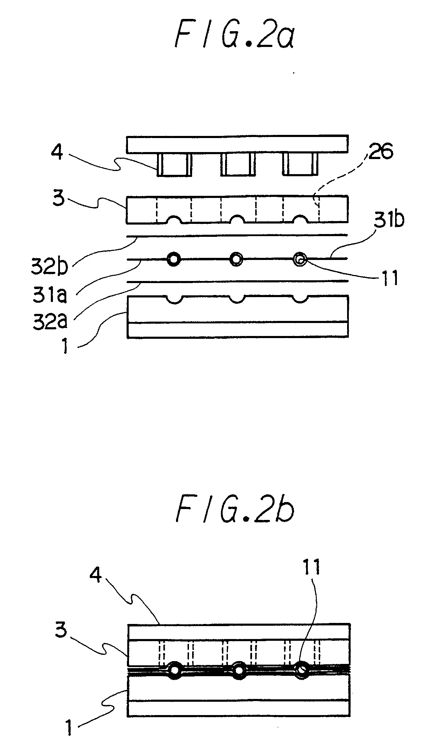

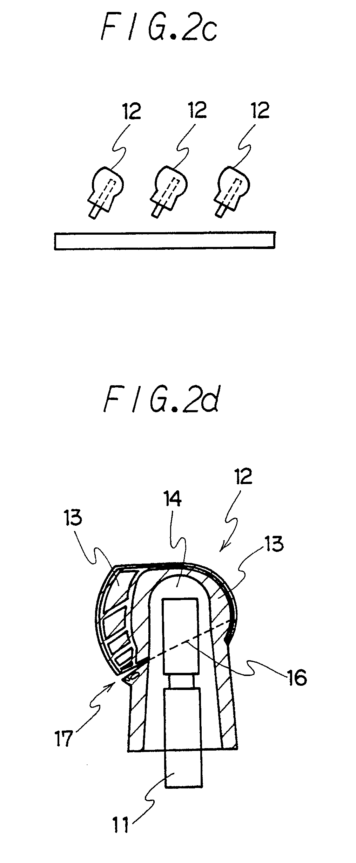

Next, a method for manufacturing a protector using an apparatus of the present invention is explained based on Fig. 2.

Firstly, a sheet to be made into a protector is cut into pieces each having a suitable length. Concrete examples employable as a sheet material or a tube material are, for instance, polyethylene, polypropylene, polyvinyl chloride, polyester, poly-(ethylenebuthylene) polystylene block copolymer, and a mixture thereof. The thickness of a sheet is preferably 20 to 300 $\mu$m.

Next, a mold-releasing sheet 32a is placed on the lower cooling mold 1 as occasion demands, and thereafter a sheet 31a is placed on the mold-releasing sheet 32a. A tube holder for holding tubes 11 are so placed on the sheet 31a as to place the tubes 11 in the grooves 22. Further, a sheet 31b and a mold- releasing sheet 32b are placed thereon in this order (step A). As mold-releasing sheets 32a, 32b, Teflon coated glass cloth, for example, can be preferably used.

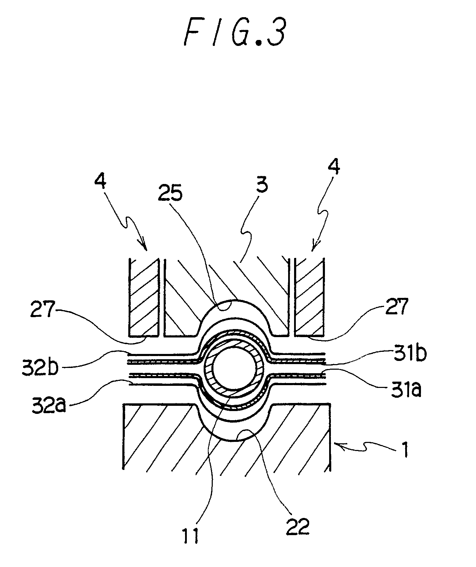

The sheets 31a, 32b, mold-releasing sheets 32a, 32b and tubes 11 are sandwiched between the upper cooling mold 3 and the lower cooling mold 1, and the heating mold 4 is inserted into the hole 26 (step B). In this state, the circumference of the tube 11, the bottom surface of the lower sheet 31a and the top surface of the upper sheet 31b contact with the upper or lower cooling mold 1, 3 through the mold-releasing sheet 32a or mold-releasing sheet 32b to form a bag portion 14 (see Fig. 3). On the contrary, a portion of the upper sheet 31b a little away from the tube 11 (i.e. a portion to be a welded portion 13) is designed to contact with a second pressing surface 27 of the heating mold 4. Accordingly, in the step B of the present invention, a unwelded portion is kept cool without being heated while only the welded portion 13 is heated and welded.

After the step B, the mold-releasing sheets 32a and 32b are removed. Outer circumference of the welded portion is trimmed using a ultrasonic cutter and a numerical controlled machine to produce a protector 12 (step C).

In the protector 12 manufactured in accordance with the above mentioned process, a tube 11 is contained in the bag portion 14 of the protector 12 as shown in Fig. 2d. Neither tear nor shrinkage generates at a boundary between the bag portion 14 and the welded portion 13 around the bag portion 14. It is preferable to form an opening line 16 comprising a partially melted line and a cut portion 17 in order to fascilitate the tearing of the protector with hands when the protector is used. The opening line 16 has a half-cut structure that a part of the sheet section of the sheet 31a and sheet 31b is cut, that is, the sheet 31a and sheet 31b are not cut to the back surface thereof. The ratio of cut thickness d of the sheets to the sheet thickness D is about 20 to 80%. It is preferable to cut the sheets with a ultrasonic cutter, because the width of the opening line 16 is very small when using a ultrasonic cutter. The cut width is preferably from 0.01 to 1.5 mm. Almost no bacteria stay within the cut portion, so that contamination of a tube with bacteria stayed within the cut portion on opening the protector is avoided.

Example 1

40 % by weight of poly(ethylenebuthylene) polystylene block copolymer (KRATON G-1650 produced by Shell Chemical Co., Ltd.), 30 % by weight of polypropylene (FL 6711N produced by Sumitomo Chemical Company, Limited) and 30 % by weight of ethyleneethylacrylate (DPDJ6182 produced by Japan Uniker Co., Ltd., amount of ethylacrylate: 15 mol %) were mixed in a mixer and melted at 200 $^{\circ}$C. The melted mixture was extruded to form sheets 31a, 31b of 250 $\mu$m in

thickness, respectively. Further, 54 % by weight of poly(ethylenebutylene)polystyrene block copolymer (KRATON G-1650 produced by Shell Chemical Co., Ltd.), 23 % by weight of polypropylene (FL6711N produced by Sumitomo Chemical Company, Limited.), and 23 % by weight of ethylene ethyl-acrylte (DPDJ6182 produced by Japan Uniker Co., Ltd., amount of ethylacrylate: 15 mol %) were mixed in a mixer and melted. The melted mixture was extruded at 200°C to form a tube 11 having an inner diameter of 5 mm, an outer diameter of 7 mm, and a length of 4 cm. The sheets 31a, 31b were cut into a piece (20 cm x 30 cm), respectively.

The cut sheet 31a (piece) was placed on the lower cooling mold 1. A tube holder 2 for holding tubes 11 was so arranged as to place the tubes 11 in the grooves 22. The sheet 31b (piece) was placed on the tubes 11, and the upper cooling mold 3 was set at a prescribed position. In this state, a second pressing surface 27 of a heating mold 4 heated at about 300°C was inserted into a hole 26 of the upper cooling mold 3. After about 8 seconds pressing, there can be obtained a protector 12 of which circumference was heat-welded. Water of 20°C was passed through the upper cooling mold 3 and the lower cooling mold 1 to enable formation of a bag portion 14 of protector 12. One hundred samples manufactured according to the above-mentioned process were observed with naked eyes in order to check shrinkage or tear of a bag portion 14 of the protector. Proportion of defective protectors was 4 %.

## Comparative Example 1

Protectors were manufactured in the same manner as in Example 1 except that water was not supplied to the upper mold 3 and lower mold 1. Proportion of defective protectors was 28 %.

According to the present invention, the inside and the outside of a blood bag is perfectly isolated since no shrinkage or tear generates at a boundary between a bag portion of a protector and a welded portion thereof, whereby perfectly preventing invation of bacteria from outside the blood bag.

## Claims

1. An apparatus for manufacturing a protector sealingly protecting an inlet/outlet tube attached to a blood bag comprising:

(a) a lower cooling mold having a plain surface whereon a sheet to be made into the protector is placed, at least one groove for receiving the tube being formed on the plain surface, and the mold being kept cool;

(b) an upper cooling mold having a plain first pressing surface corresponding to the plain surface of the lower cooling mold, at least one groove for receiving the tube being formed on the plain first pressing surface at such position as corresponds to the groove or grooves of the lower cooling mold, at least one hole having the same shape as the protector being made on the plain first pressing surface, and the mold being kept cool; and

(c) a heating mold having a second pressing surface of the same shape as a welded portion of the protector, the mold being inserted through the hole or holes of the upper cooling mold.

2. A method for manufacturing a protector sealingly protecting an inlet/outlet tube attached to a blood bag comprising the steps of putting a tube between two sheets to be made into the protector, heating a portion to be welded to form a protector, and cooling a portion adjacent to the heated portion.

3. A method of Claim 2, wherein a part of the sheet section of the sheets is cut with a ultrasonic cutter to form an opening line.

# F I G . 1

# F I G. 2a

4

26

3

31b

32b

11

31a

32a

1

# F I G. 2b

4

11

3

1

# F I G.2c

12   12   12

# F I G.2d

13   14   12   13

17

16

11

EP 0 389 920 A1

# FIG.3

# FIG.4

# F I G.5

# F I G.6

# EUROPEAN SEARCH REPORT

**European Patent Office**

| | | Application number |
|---|---|---|

## DOCUMENTS CONSIDERED TO BE RELEVANT

EP 90105181.3

| Category | Citation of document with indication, where appropriate, of relevant passages | Relevant to claim | CLASSIFICATION OF THE APPLICATION (Int Cl⁵) |
|---|---|---|---|
| A | DE - A1 - 2 908 117 (BAXTER TRAVENOL LABORATORIES INC.) * Page 15, lines 1 ff; fig. 1 * | 1 | A 61 M 5/00 |
| A | DE - A1 - 3 006 292 (BAXTER TRAVENOL LABORATORIES INC.) * Claim 21 * | 2 | |
| A | GB - A - 2 110 541 (AIS HAUSTRUP PLASTIC) * Page 2, lines 49-51 * | 3 | |

|  |
|---|
| **TECHNICAL FIELDS SEARCHED (Int Cl⁵)** |
| A 61 M 5/00 |

The present search report has been drawn up for all claims

| Place of search | Date of completion of the search | Examiner |
|---|---|---|
| VIENNA | 29-05-1990 | SCHNEEMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82